# EUROPEAN PATENT APPLICATION

(11) **EP 2 642 087 A2**
(43) Date of publication of application: **25.09.2013**
(21) Application number: 13160485.2
(22) Date of filing: 21.03.2013
(51) Int. Cl.: F01D 25/12, F01D 25/30, F02C 6/08

(54) **Active control of compressor extraction flows used to cool a turbine exhaust frame**

(30) Priority: 22.03.2012 US 201213427064
(71) Applicant: General Electric Company, Schenectady, New York 12345 (US)
(72) Inventor: Kasibholta, Ravi Shankar Venkata, 560066 Bangalore, Karnataka (IN); Ganti, Sanyaswara Rao, 560066 Bangalore, Karnataka (IN)
(74) Representative: Cleary, Fidelma

(57) **Abstract**

A gas turbine (10) includes at least one combustor (14) and an exhaust frame (18); a compressor (12) adapted to supply air to the combustor (14) and to supply bleed air to the exhaust frame (18). A cooling air supply duct (22) is arranged to supply ambient air to the exhaust frame (18) and at least one ejector (20) is arranged to supply the bleed air to the cooling air supply duct (22) upstream of the exhaust frame (18). A control valve (30) is configured to control the supply of compressor bleed air to the cooling air supply duct (22) and to the exhaust frame (18) as a function of turbine exhaust temperature and/or turbine load conditions and cooling requirements at the various turbine load conditions.

## Description

The present invention relates generally to cooling arrangements for turbomachinery and more specifically, to the cooling of a turbine engine exhaust frame utilizing bleed air from a compressor.

Turbine cooling flow management in a gas turbine system is critical to achieving increased service life and performance under all operating conditions, including part-load conditions. It has been found that exhaust temperatures are higher at both part-load and turn-down conditions as compared to base-load conditions. As a result, exhaust frame cooling demand is higher at part-load and turn-down.

In conventional systems, the coolant supply is decreased at the part-load condition due to higher secondary-flow resistance in light of higher pressures in the main flow path. Alternatively, some exhaust frame cooling systems use an external blower, but the blower is typically sized for the base-load operating condition, and supplies cooling flow at a substantially constant rate, regardless of turbine condition. As can be appreciated, blowers of this type are insufficient to provide the required exhaust frame cooling when the cooling demand is higher than experienced at the base-load condition.

Other known configurations utilize one or more eductors to draw air from the compressor or from inside the turbine casing into the gas stream or into cooling holes formed in the casing. See, for example, U.S. Patent No. 5,450,719 and 3,631,672. However, there is no modulation of the air flow through the eductor(s) that is dependent on specific engine conditions.

There remains a need, therefore, to provide a cooling arrangement for a turbine exhaust frame that meets the cooling requirements at all turbine conditions including part-load and turn-down conditions so as to optimize the service life of the exhaust frame.

In a first aspect, the invention resides in a turbine exhaust frame cooling apparatus comprising at least one combustor and an exhaust frame; a compressor adapted to supply air to the at least one turbine combustor and to supply bleed air to the exhaust frame; a cooling air supply duct arranged to supply ambient air to the exhaust frame; at least one ejector arranged to supply compressor bleed air to the cooling air supply duct upstream of the exhaust frame; and a control valve configured to control the supply of compressor bleed air to the cooling air supply duct and to the exhaust frame as a function of turbine load conditions and cooling requirements at the load conditions.

In still another aspect, the present invention resides in gas turbine comprising a compressor; a turbine having at least one combustor and an exhaust frame wherein the exhaust frame is cooled by ambient air and bleed air from the compressor; a cooling air supply duct arranged to supply ambient air to the exhaust frame, the cooling air supply duct formed with a reduced cross section throat region; at least one ejector located within the throat region, the at least one ejector connected to a conduit arranged to supply bleed air from the compressor to the cooling air supply duct; and a control valve configured to actively control the flow of bleed air from the compressor to the cooling air supply duct via the at least one ejector as a function of turbine load and/or exhaust gas temperature.

In still another aspect, the invention resides in a method of cooling an exhaust frame of a turbine comprising supplying ambient air to the turbine exhaust frame; supplying bleed air from a compressor to mix with the ambient air upstream of the exhaust frame; and controlling flow of the bleed air from the compressor as a function of engine load conditions and cooling requirements at said load conditions.

The invention will now be described in detail in connection with the drawings identified below.
FIG. 1 is a simplified schematic diagram of gas turbine including a cooling arrangement for a turbine exhaust frame in accordance with an exemplary but nonlimiting embodiment of the invention; and
FIG. 2 is a curve illustrating cooling flow based on turbine exhaust temperature and turbine load as compared to a conventional constant cooling flow system independent of load and/or exhaust temperature.

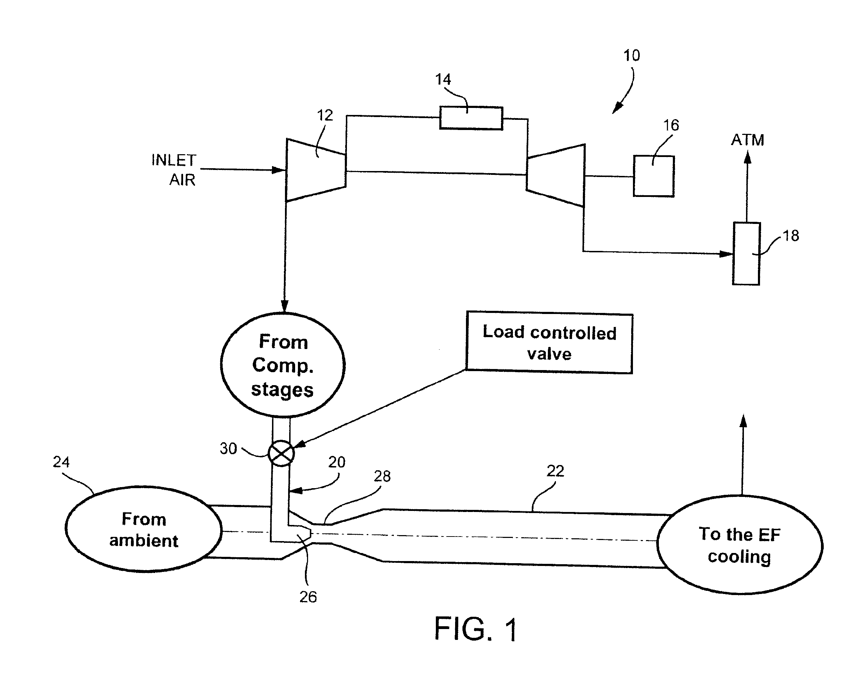

With reference to FIG. 1, a simplified schematic flow diagram is shown that includes a turbine 10, a compressor 12, one or more combustors 14 and a generator 16 driven by the turbine. It will be appreciated that the turbine 10 is supplied with inlet air from the compressor 12 and the hot combustion gases exiting the turbine are exhausted via the exhaust frame 18.

In order to improve the cooling of the exhaust frame 18, one or more ejectors 20 is inserted into the exhaust frame cooling circuit. Each ejector 20 is supplied with bleed air from the compressor 12 and injects the cooling air into the ambient air cooling flow conduit 22 that also draws ambient air into the conduit via an inlet represented at 24. The ejector 20 includes a nozzle 26 located within a reduced cross section venturi or throat region 28 of the cooling flow duct 22, upstream of the exhaust frame 18. Compressor bleed air is introduced at the nozzle 26 in the direction of cooling flow, and is controlled by a valve 30 that modulates or actively controls the flow of compressor bleed air to the one or more ejectors 20 as a function of current turbine load conditions. More specifically, the cooling requirements at various load conditions, e.g., start-up, part-load, base-load, and turn-down may be determined based on exhaust gas temperature at each of those conditions. The cooling requirements are correlated to the load-controlled valve 30 so that, at the various load conditions, the valve responds to supply the compressor bleed air flow, with the goal of meeting those cooling requirements. The determination of cooling requirements at the various load conditions, the selection and programming of the load-controlled valve to operate in accordance with the current load conditions, and the integration into the plant operating control system is well within the knowledge of one of ordinary skill in the art. Accordingly, even at part-load and turn-down conditions, the control valve may insure sufficient cooling flow to the ejector(s) 20 to mix with the ambient air and cool the exhaust frame as required.

It will be appreciated that the venturi 22 will have the desirable effect of accelerating the cooling flow within the conduit 22 and drawing more air in through the ambient air inlet 24.

It will be appreciated that the kind and number of ejectors 20 may vary, and that the various flow parameters will vary with specific applications, e.g., with different frame sizes.

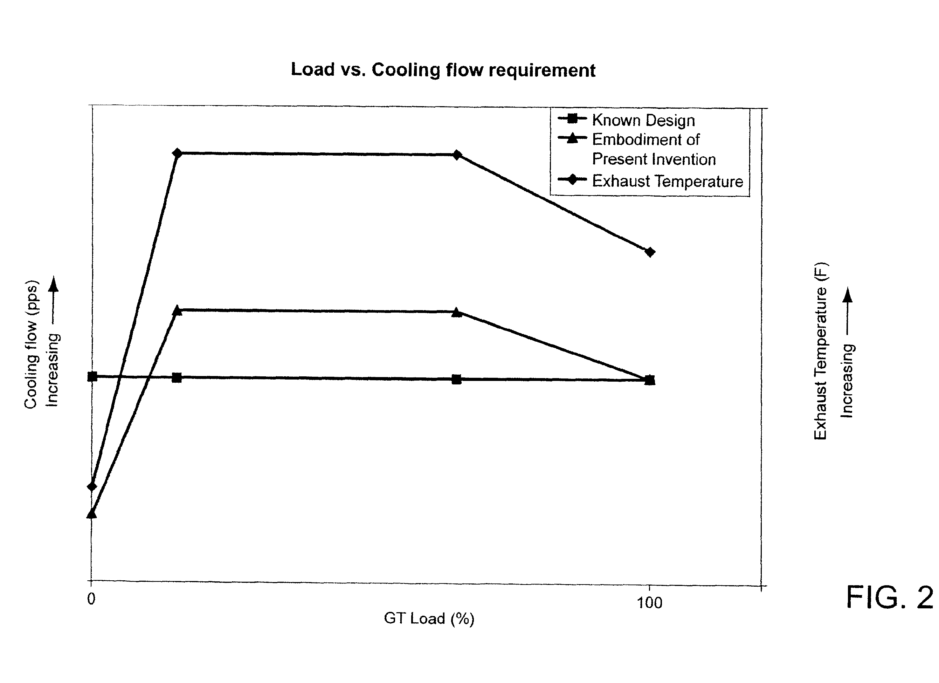

Fig. 2 shows generally the relationship between turbine engine load, cooling requirements and exhaust temperature. The graph shows a known cooling design (known design) where the cooling flow remains substantially constant through the various operating conditions. The turbine exhaust temperature may increase at part-load and can remain at an elevated level through part-load conditions.

With continuing reference to Fig. 2, in accordance with the exemplary but nonlimiting embodiment described herein, the cooling flow increases from a lower initial rate to a higher at about 20% load, tracking with the turbine exhaust temperature. The cooling rate may then remain substantially constant during increased part-load conditions, again tracking the exhaust temperature, with the goal of remaining above the existing cooling rate. At full or base-load (100%), the exhaust temperature decreases and thus, the cooling requirement may also decrease to substantially match the base-load condition. The present invention thus recognizes that the cooling requirements may increase during part-load and may increase the cooling flow accordingly via the load-controlled valve 30. By understanding the exhaust temperature as a function of turbine engine load, the cooling requirements can be met by having the load-controlled valve 30 programmed to increase/decrease cooling flow to the exhaust frame as a function exhaust temperature and/or turbine engine load conditions.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are defined by the following numbered clauses:
1. A gas turbine engine comprising:
   a compressor;
   a turbine section having at least one combustor and an exhaust frame wherein said exhaust frame is cooled by ambient air and by bleed air from the compressor;
   a cooling air supply duct arranged to supply ambient air to said exhaust frame, said cooling air supply duct formed with a reduced-cross-section throat region;
   at least one ejector located within said reduced-cross-section throat region, said at least one ejector connected to a conduit arranged to supply bleed air from said compressor to said cooling air supply duct; and
   a control valve configured to actively control flow of bleed air from the compressor to said cooling air supply duct via said at least one ejector as a function of turbine load and/or exhaust gas temperature.
2. The gas turbine engine of any preceding claim wherein said ejector is oriented to introduce the compressor bleed air in a direction of ambient air flow in the cooling air supply duct.
3. The gas turbine engine of any preceding claim wherein said conduit projects radially into said cooling air supply conduit and said at least one ejector projects axially into said throat region.
4. The gas turbine engine of any preceding claim wherein said control valve is located between said compressor and said at least one ejector.

## Claims

1. A turbine (10) comprising:
at least one combustor and an exhaust frame (18);
a compressor (12) adapted to supply air to the at least one combustor (14) and to supply bleed air to the exhaust frame (18);
a cooling air supply duct (22) arranged to supply ambient air to the exhaust frame (18);
at least one ejector (20) arranged to supply compressor bleed air to the cooling air supply duct (22) upstream of the exhaust frame (18); and
a control valve (30) configured to control the supply of compressor bleed air to the cooling air supply duct (22) and to the exhaust frame (18) as a function of turbine load conditions and cooling requirements at said turbine load conditions.

2. The turbine of claim 1, wherein said at least one ejector (20) is oriented to introduce the compressor bleed air in a direction of ambient air flow in the cooling air supply duct (22).

3. The turbine of claims 1 or 2, wherein said cooling air supply duct (22) is formed with a reduced-cross-section throat region (28), and wherein an outlet of said ejector (20) is located within said throat region.

4. The gas turbine engine of any preceding claim, wherein said control valve (30) is located between said compressor (12) and said at least one ejector (20).

5. The turbine of any preceding claim, wherein said turbine (10) comprises a gas turbine.

6. A method of cooling an exhaust frame (18) of a turbine (10) comprising:
(a) supplying ambient air to said turbine exhaust frame (18);
(b) supplying bleed air from a compressor (12) to mix with the ambient air upstream of the exhaust frame (18); and
(c) controlling flow of the bleed air from the compressor (12) as a function of engine load conditions and cooling requirements at said load conditions.

7. The method of claim 6, wherein engine load conditions include part-load, base-load and turn-down load.

8. The method of claim 6 or 7, wherein step (b) is carried out in part by introducing compressor bleed air into a duct (22) supplying the ambient air.

9. The method of claim 8, wherein the compressor bleed air is introduced into the duct (22) utilizing at least one ejector (20) located within a throat region (28) of the duct (22).

10. The method of any of claims 6 to 9, wherein step (c) is carried out utilizing a load-controlled valve in a conduit carrying the bleed air from the compressor (12).

11. The method of any of claims 6 to 10, wherein the cooling requirements are based on turbine exhaust temperature at the said load conditions.

12. The method of any of claims 8 to 11, wherein the bleed air is supplied to said duct in a direction of ambient air flow to the exhaust frame (18).

13. The method of any of claims 7 to 12, wherein a rate of flow of the bleed air from the compressor (12) is increased at the part-load condition.

14. The method of claim 13, wherein the rate of flow of the bleed air is subsequently decreased at base load.
